# FASCICULE DE BREVET EUROPEEN

(11) **EP 1 432 896 B1**
(45) Date de publication et mention de la délivrance du brevet: **20.02.2008**
(21) Numéro de dépôt: 02777418.1
(22) Date de dépôt: 11.09.2002
(51) Int. Cl.: F02D 19/06

(54) **PROCEDE D'ALIMENTATION EN CARBURANT POUR UN MOTEUR A COMBUSTION INTERNE A INJECTION A CARBURATION MIXTE ET DISPOSITIF UTILISANT UN TEL PROCEDE**
VERFAHREN UND EINRICHTUNG ZUR KRAFTSTOFFZUFUHR VON VERBRENNUNGSMOTOREN MIT ZWEI KRAFTSTOFFEN
METHOD FOR SUPPLYING FUEL FOR A DUAL-FUEL CARBURATION INJECTION INTERNAL COMBUSTION ENGINE AND DEVICE THEREFORE

(30) Priorité: 25.09.2001 FR 0112349
(43) Date de publication de la demande: 30.06.2004
(73) Titulaire: Institut Français du Pétrole, 92852 Rueil-Malmaison Cedex (FR)
(72) Inventeur: VENTURI, Stéphane, F-07100 Roiffieux (FR)
(86) Numéro de dépôt international: PCT/FR2002/003085
(87) Numéro de publication internationale: WO 2003/027463

(56) Documents cités:
- EP-A- 0 704 611
- EP-A- 1 043 488
- WO-A-98/51923
- WO-A-99/01659
- FR-A- 2 771 139
- FR-A- 2 777 605

## Description

La présente invention est relative à un procédé et à un dispositif associé permettant d'améliorer l'alimentation en carburant d'un moteur à combustion interne à injection à carburation mixte.

La présente invention s'applique à tout type de carburation mixte, c'est-à-dire à des moteurs fonctionnant avec des carburants ayant des natures ou des compositions différentes.

Elle s'applique plus particulièrement à des types de carburation mixte dans lesquelles l'un des carburants est injecté dans une plage de pressions basses (c'est à dire inférieure à la pression d'injection du deuxième carburant) et appelé dans la suite de la description carburant basse pression, l'autre carburant étant injecté dans une plage de pressions hautes (c'est à dire supérieure à la pression d'injection du premier carburant) et appelé dans la suite de la description carburant haute pression.

Le carburant haute pression pourra en particulier être choisi dans le groupe constitué par le GPL (gaz de pétrole liquéfié), le GNV (gaz naturel pour véhicules), le dimethylether (DME), de l'éthylal, du méthylal ou du diéthyléther ou d'un mélange d'au moins deux de ces carburants.

Le carburant basse pression pourra en particulier être choisi dans le groupe constitué par les essences ou les gazoles.

Les moteurs à injection à carburation mixte, tels que les moteurs à combustion interne fonctionnant à l'essence et au GPL (Gaz de Pétrole Liquéfié), notamment pour véhicules automobiles, constituent une solution prometteuse aux problèmes de pollution rencontrés notamment en milieu urbain.

Dans un véhicule automobile, le GPL est stocké sous haute pression sous forme liquide dans un réservoir et il a tendance à se vaporiser lorsqu'il sort de ce réservoir.

Pour pouvoir contrôler parfaitement la quantité de GPL injectée dans le moteur, notamment dans le but de satisfaire aux normes de pollution, une approche intéressante est l'injection du GPL sous forme liquide.

Dans ce cas, il est impératif de maintenir l'état liquide de ce carburant GPL dans l'ensemble du circuit d'injection, quelles que soient les conditions de fonctionnement du moteur.

Pour cela, on utilise classiquement une pompe de surpression située le plus souvent à l'intérieur même du réservoir de GPL ou entre ledit réservoir et le moteur et les pressions atteintes sont typiquement de l'ordre de 20 bars.

A titre d'exemple, le brevet US 5,377,465 décrit un procédé permettant de maintenir, sous l'effet d'une pompe, un carburant GPL sous forme liquide dans la rampe d'injection lors du fonctionnement du moteur à une pression constamment supérieure à la pression de vapeur saturante du réservoir grâce à la présence d'un régulateur de pression positionné en aval des injecteurs.

Les pressions atteintes dans le circuit GPL étant nettement supérieures à celles qui sont nécessaires pour alimenter le moteur avec un autre carburant basse pression, tel que de l'essence, il est nécessaire de prévoir deux circuits d'alimentation distincts pour surmonter les problèmes susceptibles de survenir lors d'une transition d'un mode de carburation à un autre.

Ainsi, classiquement, un moteur à injection à carburation mixte comporte deux rampes de distribution et deux séries d'injecteurs distincts, d'où il résulte une complexité, un coût et un encombrement assez prohibitifs.

La demande de brevet EP-A-1,043,488 propose un procédé de gestion de l'alimentation d'un moteur à carburation mixte, dans lequel on utilise deux carburants présents à des pressions différentes.

Dans ce document, une même rampe de distribution et une même série d'injecteurs sont utilisés pour alimenter ledit moteur.

Le carburant basse pression est, lors des phases transitoires, porté à une pression sensiblement identique à celle du carburant haute pression, les deux carburants étant mélangés dans l'unique rampe lors desdites phases.

Ce procédé présente cependant plusieurs inconvénients :
- au niveau du coût matériel de sa réalisation puisqu'il nécessite, entre autres, l'utilisation d'au moins trois électrovannes trois voies et la présence d'une cartouche de charbon actif pour stocker dans un système de stockage (canister) une partie du mélange des deux carburants issue des phases de transition,
- au niveau technique avec, notamment lors des phases de transition, la formation d'un mélange des deux carburants dans la rampe d'injection passant sensiblement en totalité dans le canister. Des difficultés de fonctionnement dudit canister sont alors à prévoir, par exemple lors d'une succession de phases de transition.

Dans le document FR 2,777,605 le procédé décrit consiste à utiliser deux rampes différentes, une rampe pour chaque carburant, et à alimenter chaque rampe par le carburant adéquat.

Ce procédé présente l'inconvénient d'entraîner un manque d'alimentation en carburant des injecteurs, lors du passage d'alimentation d'un carburant à un autre carburant. Ceci peut entraîner des à coups de fonctionnement du moteur avec une nuisance dans le confort de conduite.

La présente invention a pour but de fournir un procédé et un dispositif d'alimentation en carburant d'un moteur à carburation mixte permettant de s'affranchir de ces inconvénients et ne nécessitant qu'un nombre très limité de points de commande.

Selon la présente invention, on n'utilise ainsi qu'un seul injecteur ou qu'une seule série d'injecteurs pour alimenter sélectivement le moteur avec l'un ou l'autre des deux carburants, sans qu'il y ait de risque de vaporisation du carburant présent sous haute pression, lors d'une transition d'un mode de carburation à un autre, ou de mélange incontrôlé des deux carburants dans les circuits d'injection.

Le dispositif selon l'invention permet ainsi avantageusement de gérer de manière simple, efficace et peu coûteuse l'injection liquide de carburant lors du démarrage, à froid ou à chaud, ou du fonctionnement d'un moteur à combustion interne fonctionnant sur le mode de la bicarburation avec notamment un carburant haute pression tel que définit précédemment.

L'invention permet en outre de s'affranchir des problèmes de confinement du GPL liquide dans le circuit d'injection en évitant notamment les conséquences néfastes d'éventuelles fuites des injecteurs.

En outre, il est possible selon l'invention d'utiliser, pour l'injection des carburants haute et basse pressions, les injecteurs classiquement commercialisés pour l'injection d'essence et cela, à moindre coût.

Ainsi, l'invention concerne un procédé d'alimentation en carburant pour un moteur à injection à carburation mixte pouvant être alimenté sélectivement, selon un mode de carburation, avec un premier carburant ou, selon un autre mode de carburation, avec un deuxième carburant, caractérisé en ce qu'on alimente le même injecteur ou la même série d'injecteurs en carburant de la première rampe par des premiers moyens de vannage situés un premier conduit d'alimentation ou en carburant de a deuxième rampe par des seconds moyens de vannage situés sur un deuxième conduit d'alimentation.

Avantageusement, on peut utiliser un premier carburant dans une plage de pressions hautes et un deuxième carburant dans une plage de pressions basses.

On peut utiliser également un premier carburant présentant un point d'ébullition inférieur à la température ambiante sous la pression atmosphérique.

Le passage d'un mode de carburation à un autre peut être effectué à l'aide d'une cartographie mémorisée.

De manière avantageuse, on peut utiliser un carburant haute pression compris dans le groupe constitué par le GPL (gaz de pétrole liquéfié), le GNV (gaz naturel pour véhicules), le dimethylether (DME), le dimétoxyméthane, le dimétoxyéthane, le diéthyléther ou d'un mélange d'au moins deux desdits carburants.

On peut utiliser un carburant basse pression compris dans le groupe constitué par les essences, les gazoles.

Selon un aspect de l'invention, on peut injecter directement lesdits carburants dans la chambre de combustion dudit moteur.

De manière alternative, on peut injecter indirectement lesdits carburants dans la chambre de combustion dudit moteur.

L'invention concerne aussi un dispositif d'alimentation en carburant d'un moteur à injection à carburation mixte, comprenant une première rampe alimentant ledit moteur sélectivement avec un premier carburant, une deuxième rampe alimentant ledit moteur sélectivement avec un deuxième carburant, un même injecteur ou une même série d'injecteurs communiquant avec les rampes par un premier et un deuxième conduits d'alimentation, caractérisé en ce qu'il comprend des premiers moyens de vannage disposés sur le premier conduit d'alimentation de ladite première rampe et des seconds moyens de vannage disposés sur et deuxième conduit d'alimentation de ladite seconde rampe.

Les moyens de vannage peuvent être du type électrovannes commandées.
Les moyens de vannage peuvent comprendre des moyens d'obturation répondant à la pression hydraulique, notamment à la pression de carburant, ou des moyens anti-retour de fluide.

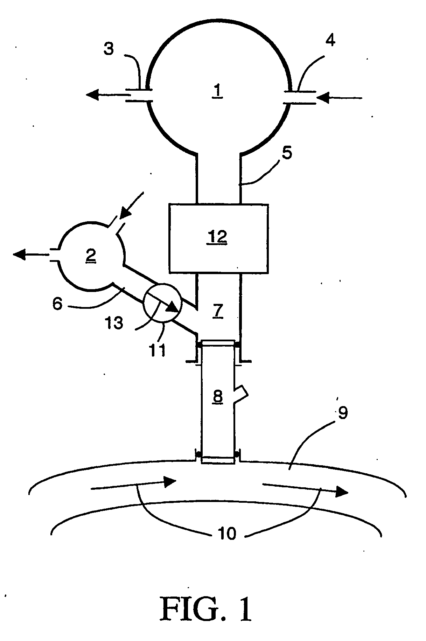

D'autres caractéristiques, détails et avantages de l'invention apparaîtront plus clairement à la lecture de la description d'un mode de réalisation non limitatif de l'invention illustré par la figure 1.

La figure 1 illustre schématiquement un dispositif d'alimentation pour un moteur à combustion interne avec une injection à carburation mixte fonctionnant, selon un mode de carburation, avec un premier carburant ou, selon un autre mode de carburation, avec un deuxième carburant.

Plus précisément, le premier carburant est injecté dans une plage de pressions hautes (c'est à dire supérieur à la pression d'injection du deuxième carburant), dénommé dans la suite de la description carburant haute pression alors que le deuxième carburant est injecté dans une plage de pressions basses (c'est à dire inférieure à la pression d'injection du deuxième carburant) et désigné dans la description carburant basse pression.

Le carburant haute pression, dans l'exemple décrit, est choisi dans le groupe constitué par le GPL (gaz de pétrole liquéfié), le GNV (gaz naturel pour véhicules), le dimethylether (DME), de l'éthylal, du méthylal ou du diéthyléther ou d'un mélange d'au moins deux de ces carburants alors que le carburant basse pression pourra en particulier être sélectionné dans le groupe constitué par les essences ou les gazoles.

Pour des raisons de simplification de la description ci-après, il a été choisi le Gaz de Pétrole Liquéfié (GPL) pour le premier carburant qui a un point d'ébullition inférieur à la température ambiante sous la pression atmosphérique et l'essence pour le deuxième carburant.

En se reportant maintenant à la figure 1, le dispositif comprend une rampe 1 spécifiquement dédiée à l'injection d'un premier carburant dans une plage de pressions hautes (carburant GPL) et une rampe 2 qui permet d'alimenter le moteur avec un deuxième carburant dans une plage de pressions basses, tel que de l'essence.

La rampe 1 est en communication avec un réservoir (non représenté sur la figure 1) par une ligne 4 et intègre le plus souvent un circuit de carburant (non représenté) dans lequel le carburant pompé dans le réservoir et non injecté dans le moteur au niveau de la rampe 1 est réinjecté sous pression dans ce réservoir grâce à une conduite 3 de retour carburant.

Les conditions de pression régnant dans la rampe 1 sont ajustées de telle façon que le GPL est présent exclusivement ou en très grandes proportions sous forme liquide.

Par exemple, les conditions de pression, pour obtenir une telle forme liquide du carburant GPL, sont typiquement comprises entre environ 4 bars et environ 20. bars.

La deuxième rampe 2 est reliée à un deuxième réservoir (non représenté) et permet d'alimenter le moteur avec le carburant essence pour lequel la pression est généralement d'environ 3 bars.

De manière connue en soi, la rampe 2 peut éventuellement intégrer un circuit de carburant sur le modèle de la rampe 1.

Les première et deuxième rampes 1, 2 comprennent chacune un conduit d'alimentation ou une série de conduits d'alimentation, référencés sur la figure respectivement 5 et 6, qui se rejoignent en une chambre collectrice 7 qui communique avec un injecteur 8.

Le carburant issu de la rampe 1 ou de la rampe 2, selon les modes de fonctionnement ultérieurement décrits, circule dans le conduit d'alimentation 5 ou 6, aboutit dans la chambre collectrice 7, puis est injecté par les injecteurs 8 dans la tubulure d'admission du moteur 9 où il est pulvérisé et mélangé selon les règles de l'art avec l'air d'admission dont la circulation est symbolisée sur la figure 1 par les flèches 10.

Bien entendu, il est possible, sans sortir du cadre de la présente invention, d'utiliser soit un seul injecteur pour les deux rampes, par exemple pour une injection monopoint, soit une série d'injecteurs, chacun desdits injecteurs étant relié aux deux rampes 1 et 2, par exemple pour une injection multipoints.

Des moyens de vannage permettent de sélectionner la nature du carburant à injecter dans la tubulure 9 par les injecteurs 8.

Ces moyens de vannage peuvent notamment être un volet articulé, une vanne 3 voies à tiroir ou un robinet 3 voies à boisseau, disposé à l'intersection des deux conduits 5 et 6 débouchant dans la chambre 7, lesdits moyens permettant l'introduction dans la chambre collectrice de l'un ou de l'autre des carburants.

Dans l'exemple de la figure 1, les moyens de vannage 11 et 12 sont disposés, à proximité de la chambre 7, respectivement sur les conduits d'alimentation 6 et 5 et ainsi autorisent ou interdisent l'admission de l'un ou de l'autre des carburants dans la chambre collectrice 7.

Plus précisément, ces moyens 11 et 12 peuvent comprendre une électrovanne commandée extérieurement, par exemple par un calculateur, ou plus avantageusement un clapet anti-retour n'autorisant la circulation des fluides que dans le sens de la rampe concernée vers la chambre collectrice 7.

Les moyens 11 et 12 peuvent également comprendre tout moyen de vannage équivalent connu permettant d'obtenir l'étanchéité voulue, tel que par exemple, un moyen d'isolation actionné sous la pression du carburant tel que décrit dans la demande de brevet FR 00/16829 du demandeur.

Dans la suite de la présente description, lesdits moyens 11 et 12 seront décrits en position ouverte lorsqu'ils permettent le passage du fluide les traversant, en position fermée lorsqu'ils l'empêchent.

Dans un premier mode de fonctionnement du dispositif, le moteur est alimenté avec le second carburant (essence) qui circule dans la rampe 2.

Dans ce mode de carburation, les moyens de vannage 12 sont en position fermée et les moyens 11 sont en position ouverte.

Dans cette configuration, le carburant essence (basse pression) parvient dans la chambre collectrice 7 et est injecté dans la tubulure 9 par l'intermédiaire de l'injecteur 8.

Pendant ce mode de fonctionnement, les moyens de vannage 12 prévus sur le conduit 5 sont en position fermée :
- soit sous l'action d'une commande extérieure, éventuellement cartographiée, dans le cas de l'utilisation d'électrovanne,
- soit, dans le cas de l'utilisation d'un clapet anti-retour, sous l'effet de la pression du carburant présente dans la rampe 2, le conduit 6 et la chambre 7. Ce clapet se ferme mécaniquement lorsque la pression du carburant dans la chambre collectrice 7 devient supérieure à la pression du carburant présent dans la rampe 1 et c'est ce qui se passe dans le cas où la rampe 1 serait purgée de son carburant, comme décrit dans la demande FR-A-2791093 du demandeur,
- soit sous l'effet de la pression générée par le carburant de la rampe 2 qui va actionner un moyen d'isolation comme cela est décrit plus en détail dans la demande FR 00/16829 du demandeur.

Les moyens de vannage 11 du conduit 6 sont commandés en position ouverte :
- soit sous l'action d'une commande extérieure, éventuellement cartographiée, dans le cas de l'utilisation d'électrovanne,
- soit sous l'effet de la pression générée par le carburant dans la rampe 1 dans le cas de l'utilisation d'un clapet anti-retour et cela grâce à la purge de la rampe 2 comme précédemment mentionné,
- soit sous l'effet de la pression générée par le carburant de la rampe 2 qui va actionner un moyen d'isolation comme mentionné ci-dessus.

Lors du passage au deuxième mode de fonctionnement du dispositif, c'est-à-dire à un autre mode de carburation par une alimentation du moteur avec le carburant GPL circulant dans la rampe 1, les moyens de vannage 12 sont ouverts alors que les moyens 11 sont fermés et le carburant GPL remplace le carburant essence.

Les moyens de vannage 12 sont basculés en position ouverte et les moyens de vannage 11 sont commandés en position de fermeture par les commandes et effets décrits ci-dessus.

Plus précisément, les moyens de vannage 12 sont en position ouverte soit sous l'action d'une commande extérieure, éventuellement cartographiée, dans le cas de l'utilisation d'électrovanne, soit, dans le cas de l'utilisation d'un clapet anti-retour, sous l'effet de la pression du carburant présente dans la rampe 1, soit sous l'effet de la pression générée par le carburant de la rampe 2 qui va actionner un moyen d'isolation comme cela est décrit plus en détail dans la demande FR 00/16829 précitée.

Les moyens de vannage 11 sont en position fermée soit sous l'action d'une commande extérieure, éventuellement cartographiée, dans le cas de l'utilisation d'électrovanne, soit, dans le cas de l'utilisation d'un clapet anti-retour, sous l'effet de la pression du carburant présente dans la rampe 1, le conduit 5 et la chambre 7, cette pression étant supérieure à celle régnant dans la rampe 2, soit sous l'effet de la pression générée par le carburant de la rampe 1 qui va actionner un moyen d'isolation comme cela a été décrit dans la demande FR 00/16829 déjà citée.

Le passage du deuxième mode de carburation du moteur au premier mode est réalisé inversement par la fermeture des moyens 12 et le basculement en position ouverte des moyens 11.

Au contraire des dispositifs antérieurs, le présent dispositif présente ainsi l'avantage de ne nécessiter qu'un nombre très limité de points de commande, une seule électrovanne comme moyen de vannage 12 étant par exemple nécessaire au fonctionnement de l'ensemble du dispositif dans le cas de l'utilisation d'un clapet anti-retour utilisé en tant que moyen de vannage 11.

Bien entendu, la présente invention n'est pas limitée à l'exemple décrit ci-dessus mais englobe toutes variantes.

Notamment, il peut être prévu que l'injection des carburants se fasse directement dans la chambre de combustion du moteur à combustion interne.

## Revendications

1. Procédé d'alimentation en carburant pour un moteur (9) à injection à carburation mixte pouvant être alimenté sélectivement, selon un mode de carburation, avec un premier carburant ou, selon un autre mode de carburation, avec un deuxième carburant, dans lequel on utilise deux rampes de distribution (1, 2) pour alimenter, sélectivement avec l'un ou l'autre de ces deux carburants, un même injecteur (8) ou une même série d'injecteurs en communication par un premier et un deuxième conduits d'alimentation (5, 6) avec lesdites deux rampes, **caractérisé en ce qu'**on alimente le même injecteur (8) ou la même série d'injecteurs en carburant de la première rampe (1) par des premiers moyens de vannage (11) ou en carburant de la deuxième rampe (2) par des seconds moyens de vannage (12) situés respectivement sur lesdits premier et deuxième conduits d'alimentation (5, 6).

2. Procédé selon la revendication 1, dans lequel on utilise un premier carburant dans une plage de pressions hautes et un deuxième carburant dans une plage de pressions basses.

3. Procédé selon la revendication 2, dans lequel on utilise un premier carburant présentant un point d'ébullition inférieur à la température ambiante sous la pression atmosphérique.

4. Procédé selon l'une des revendications 1 ou 2, dans lequel le passage d'un mode de carburation à un autre est effectué à l'aide d'une cartographie mémorisée.

5. Procédé selon l'une quelconque des revendications précédentes, dans lequel on utilise un carburant haute pression compris dans le groupe constitué par le GPL, gaz de pétrole liquéfié, le GNV, gaz naturel pour véhicules, le dimethylether, DME le dimétoxyméthane, le dimétoxyéthane, le diéthyléther ou d'un mélange d'au moins deux desdits carburants.

6. Procédé selon l'une quelconque des revendications précédentes, dans lequel on utilise un carburant basse pression compris dans le groupe constitué par les essences, les gazoles.

7. Procédé selon l'une quelconque des revendications précédentes, dans lequel on injecte directement lesdits carburants dans la chambre de combustion dudit moteur (9).

8. Procédé selon l'une quelconque des revendications 1 à 6, dans lequel on injecte indirectement lesdits carburants dans la chambre de combustion dudit moteur (9).

9. Dispositif d'alimentation en carburant d'un moteur (9) à injection à carburation mixte comprenant une première rampe (1) alimentant ledit moteur sélectivement avec un premier carburant, une deuxième rampe (2) alimentant ledit moteur sélectivement avec un deuxième carburant, un même injecteur ou une même série d'injecteurs (8) communiquant avec les rampes (1, 2) par un premier et un deuxième conduits d'alimentation (5, 6), **caractérisé en ce qu'**il comprend des premiers moyens de vannage (11) disposés sur le premier conduit d'alimentation (5) de ladite première rampe (1) et des seconds moyens de vannage (12) disposés sur le deuxième conduite d'alimentation (6) de ladite seconde rampe (2).

10. Dispositif d'injection selon la revendication 9, dans lequel les moyens de vannage (11, 12) sont du type à électrovannes commandées.

11. Dispositif d'injection selon l'une des revendications 9 à 10, dans lequel les moyens de vannage (11, 12) comprennent des moyens d'obturation répondant à la pression hydraulique, notamment à la pression de carburant.

12. Dispositif d'injection selon l'une des revendications 9 à 11, dans lequel les moyens de vannage (11, 12) comprennent des moyens anti-retour de fluide.

## Claims

1. A fuel supply method for a dual-fuel injection engine (9) which can be supplied selectively, according to one carburetion mode, with a first fuel or, according to another carburetion mode, with a second fuel, in which two distribution manifolds (1, 2) are used in order to selectively supply, with one or the other of these two fuels, a same injector (8) or a same series of injectors in communication, via a first and a second supply conduit (5, 6), with said two manifolds, **characterised in that** the same injector (8) or the same series of injectors is supplied with fuel from the first manifold (1) by first valve means (11) or with fuel from the second manifold (2) by second valve means (12) situated respectively on said first and second supply conduits (5, 6).

2. The method according to Claim 1, in which a first fuel is used within a range of high pressures and a second fuel is used within a range of low pressures.

3. The method according to Claim 2, in which a first fuel is used, which has a boiling point lower than the ambient temperature under atmospheric pressure.

4. The method according to one of Claims 1 or 2, in which the transition from one carburetion mode to another is carried out using memorised mapping.

5. The method according to any one of the preceding claims, in which a high-pressure fuel is used which is in the group made up of LPG, liquified petroleum gas, NVG, natural vehicle gas, dimethylether, DME, dimethoxymethane, dimethoxyethane, diethylether or of a mixture of at least two of said fuels.

6. The method according to any one of the preceding claims, in which a low-pressure fuel in the group made up of petrols and gas oils is used.

7. The method according to any one of the preceding claims, in which said fuels are directly injected into the combustion chamber of said engine (9).

8. The method according to any one of Claims 1 to 6, in which said fuels are indirectly injected into the combustion chamber of said engine (9).

9. The fuel supply device of a dual-fuel injection engine (9) including a first manifold (1) selectively supplying said engine with a first fuel, a second manifold (2) selectively supplying said engine with a second fuel, a same injector or a same series of injectors (8) communicating with the manifolds (1, 2) via a first and a second supply conduit (5, 6), **characterised in that** it includes first valve means (11) arranged on the first supply conduit (5) of said first manifold (1) and second valve means (12) arranged on the second supply conduit (6) of said second manifold (2).

10. The injection device according to Claim 9, in which the valve means (11, 12) are of the controlled solenoid valve type.

11. The injection device according to one of Claims 9 to 10, in which the valve means (11,12) include obturation means responding to the hydraulic pressure, particularly to the fuel pressure.

12. The injection device according to one of Claims 9 to 11, in which the valve means (11,12) include non-return means for the fluid.

## Patentansprüche

1. Verfahren zur Treibstoffversorgung eines Einspritzmotors (9) mit Mischvergasung, der selektiv nach einem Vergasungsmodus mit einem ersten Treibstoff oder nach einem weiteren Vergasungsmodus mit einem zweiten Treibstoff versorgt werden kann, bei dem zwei Verteilungsrampen (1, 2) verwendet werden, um selektiv mit dem einen oder dem anderen dieser beiden Treibstoffe eine selbe Einspritzdüse (8) oder eine selbe Reihe von Einspritzdüsen, die über eine erste und ein zweite Versorgungsleitung (5, 6) mit den beiden Rampen in Verbindung stehen, zu versorgen, **dadurch gekennzeichnet, dass** dieselbe Einspritzdüse (8) oder dieselbe Reihe von Einspritzdüsen mit Treibstoff von der ersten Rampe (1) durch erste Ventilmittel (11) oder mit Treibstoff von der zweiten Rampe (2) durch zweite Ventilmittel (12) versorgt werden, die sich auf der ersten bzw. zweiten Versorgungsleitung (5, 6) befinden.

2. Verfahren nach Anspruch 1, bei dem ein erster Treibstoff in einem Hochdruckbereich und ein zweiter Treibstoff in einem Niederdruckbereich verwendet wird.

3. Verfahren nach Anspruch 2, bei dem ein erster Treibstoff verwendet wird, der einen Siedepunkt unter der Raumtemperatur unter Luftdruck aufweist.

4. Verfahren nach einem der Ansprüche 1 oder 2, bei dem der Übergang von einem Vergasungsmodus in einen anderen mit Hilfe einer gespeicherten Kartographie erfolgt.

5. Verfahren nach einem der vorhergehenden Ansprüche, bei dem ein Hochdrucktreibstoff verwendet wird, der in der Gruppe enthalten ist, die von LPG, flüssigem Propangas, VNG, Erdgas für Fahrzeuge, Dimethylether, DME, Dimethoxymethan, Dimethoxyethan, Diethylether oder einem Gemisch mindestens zweier dieser Treibstoffe gebildet ist.

6. Verfahren nach einem der vorhergehenden Ansprüche, bei dem ein Niederdrucktreibstoff verwendet wird, der in der von den Benzinen und Gasölen gebildeten Gruppe enthalten ist.

7. Verfahren nach einem der vorhergehenden Ansprüche, bei dem die Treibstoffe direkt in die Brennkammer des Motors (9) eingespritzt werden.

8. Verfahren nach einem der Ansprüche 1 bis 6, bei dem die Treibstoffe indirekt in die Brennkammer des Motors (9) eingespritzt werden.

9. Vorrichtung zur Treibstoffversorgung eines Einspritzmotors (9) mit Mischvergasung, umfassend eine erste Rampe (1), die den Motor selektiv mit einem ersten Treibstoff versorgt, eine zweite Rampe (2), die den Motor selektiv mit einem zweiten Treibstoff versorgt, wobei eine selbe Einspritzdüse oder eine selbe Reihe von Einspritzdüsen (8) mit den Rampen (1, 2) durch eine erste und eine zweite Versorgungsleitung (5, 6) in Verbindung stehen, **dadurch gekennzeichnet, dass** sie erste Ventilmittel (11), die auf der ersten Versorgungsleitung (5) der ersten Rampe (1) angeordnet sind, und zweite Ventilmittel (12), die auf der zweiten Versorgungsleitung (6) der zweiten Rampe (2) angeordnet sind, umfasst.

10. Einspritzvorrichtung nach Anspruch 9, bei der die Ventilmittel (11, 12) vom Typ mit gesteuerten Magnetventilen sind.

11. Einspritzvorrichtung nach einem der Ansprüche 9 bis 10, bei der die Ventilmittel (11, 12) Verschlussmittel umfassen, die auf den Hydraulikdruck, insbesondere den Treibstoffdruck, reagieren.

12. Einspritzvorrichtung nach einem der Ansprüche 9 bis 11, bei der die Ventilmittel (11, 12) Mittel zur Verhinderung des Fluidrückflusses umfassen.
